# EUROPEAN PATENT APPLICATION

(11) **EP 1 775 669 A1**
(43) Date of publication of application: **18.04.2007**
(21) Application number: 06021757.7
(22) Date of filing: 17.10.2006
(51) Int. Cl.: G06F 21/00, H04M 1/725

(54) **Mobile communication terminal having an enhanced data management function**

(30) Priority: 17.10.2005 KR 20050097746
(71) Applicant: LG Electronics Inc., Yongdungpo-Gu Seoul 150-010 (KR)
(72) Inventor: Kim, Jong-Hwan, Gwanak-Gu, Seoul (KR)
(74) Representative: Katérle, Axel

(57) **Abstract**

A mobile terminal includes an input unit (10) which allows a user to input a command, a controller (30) which groups data according to the inputted command and controls the grouped data, and a memory (50) which stores a group identifier identifying the grouped data. The controller performs an authorization process, when the stored group identifier is input by the user.

## Description

### BACKGROUND OF THE INVENTION

### 1. Field of the Invention

The present invention relates to a mobile communication terminal, and more particularly, to a mobile communication terminal capable of locking or hiding data stored in the mobile communication terminal.

### 2. Background of the Invention

Most mobile communication service providers offer a variety of communication-related services, such as wireless Internet access, Video on Demand (VoD) services, transmission of text and multimedia messages, wireless online gaming, and the like. Typically, conventional mobile terminals are provided with a variety of applications not associated with communication, such as a camera application, a phone book application, a notepad application, a scheduling application, an alarm application, and the like.

Typically, a user can store and access various types of data, such as, but not limited to, images, videos, text messages and phone numbers, in the mobile communication terminal. The stored data may contain certain private information which the user does not want others to be able to access or view. In such a case, the user can prevent others from accessing this private data by password-protecting a menu which a user must access in order to access the private data. That is, in order to access the private data, a user must enter a predetermined secret password to gain access to a menu which provides access to the private data.

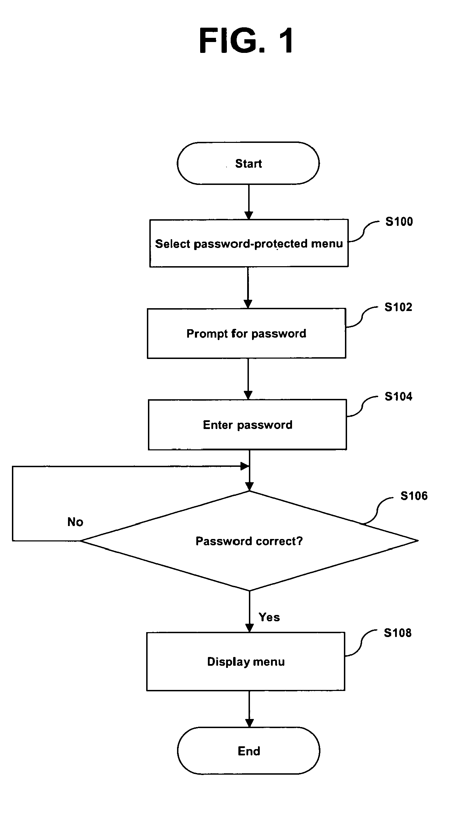

Fig. 1 is a flowchart illustrating a method of accessing a menu in a related art mobile communication terminal.

The method illustrated in Fig. 1 is followed when a menu in a mobile communication terminal is password-protected. The method begins when a user selects a password-protected menu in order to access stored data which is made accessible by the menu (S100). When the user selects the password-protected menu, the mobile communication terminal prompts the user to enter a password, such as, for example, by displaying a pop-up window (S102). After the user enters a password (S104), the mobile communication terminal determines whether the password is correct (S106). If the password is correct, the menu is made accessible to the user, and the options or data files listed in the menu are displayed to the user (S108).

A related-art mobile communication terminal having password-protected menus as described above prevents unauthorized access to an entire menu of options or data files. For example, it may prevent access to a call sending menu, a messaging menu, a call log menu, a phone book menu, a camera menu, an Internet access menu, or the like. Accordingly, in order to access a single menu option or data file listed in a menu, a user must enter a password to access the full menu.

A disadvantage of the related-art mobile communication terminals is that a user may wish to prevent access to only a single option or data file listed in a menu. However, if the user password-protects the menu listing this option or data file, he also restricts access to all other options or data files listed in this menu, which is inconvenient to the user.

### SUMMARY OF THE INVENTION

One of the features of the present invention is that it allows selected data stored in a mobile communication terminal to be grouped and locked or hidden.

To achieve at least these features, there is provided a mobile terminal which includes an input unit which allows a user to input a command, a controller which groups data according to the inputted command and controls the grouped data, and a memory which stores a group identifier identifying the grouped data.

The controller may assign the group identifier to the grouped data, and may store the group identifier in the memory. The terminal may also include a processor which processes the group identifier and the grouped data when the group identifier is inputted to the mobile terminal.

The processor may determine whether an inputted group identifier is a registered group identifier, and may perform an authorization process when the inputted group identifier is a registered group identifier. The authorization process may include prompting the user to enter a password. Prompting the user to enter a password may include displaying a pop-up window.

The controller may display a list of grouped data corresponding to the inputted group identifier on a display when the inputted group identifier is a registered group identifier. Data selected from the list of grouped data may be displayed on the display. A user may display, lock, unlock or delete data in the displayed list of grouped data.

The data may include at least one of a text message, a phone number and an image stored in the mobile terminal. The group identifier may include at least one of a numeral and a character. The controller may add the grouped data to a pre-existing group of data, or store grouped data in the memory as a new group.

There is also provided a method for managing data in a mobile terminal which includes grouping data, assigning a group identifier to the grouped data to identify the grouped data, and storing the group identifier in a memory of the mobile terminal.

The grouped data may be data to be locked or hidden. The group identifier may include at least one of a numeral and a character. The method may also include locking or hiding data in the grouped data, and storing an indication of locked or hidden data with the group identifier.

There is also provided a method for managing data in a mobile terminal which includes grouping data and assigning a group identifier to the grouped data to identify the grouped data, storing the group identifier and the grouped data, and displaying the grouped data when the group identifier is inputted by a user.

The method may include locking or hiding selected data in the grouped data. Storing the grouped data may include one of adding the grouped data to a pre-existing group of data and storing the grouped data as a new group. The method may also include assigning a title to the grouped data.

The method may include determining whether a group identifier inputted by the user is a registered group identifier, and performing an authorization process when the inputted group identifier is a registered group identifier. The authorization process may include prompting the user to enter a password. Prompting the user to enter a password may include displaying a pop-up window.

The method may include displaying at least one of the group identifier and a title assigned to the grouped data. The method may also include performing an authentication process when a specific key is pressed. The grouped data may be displayed if the authentication process is passed successfully.

The method may include displaying a list of the grouped data when the authorization process is passed successfully. The method may also include displaying data selected from the list of grouped data. The displayed data may be able to be locked, hidden or deleted. The data may include at least one of a text message, a phone number and an image stored in the mobile terminal. The group identifier may include at least one of a numeral and a character.

Other exemplary embodiments and features of the present invention may be ascertained by reviewing the present disclosure and the accompanying drawings.

### BRIEF DESCRIPTION OF THE DRAWINGS

The present invention will become more fully understood from the detailed description given hereinbelow and the accompanying drawings, which are given by illustration only, and thus are not limitative of the present invention, and wherein:
Fig. 1 is a flowchart illustrating a method of accessing a menu in a related art mobile communication terminal;
Fig. 2 is a block diagram illustrating components of a mobile communication terminal in accordance with one aspect of the present invention;
Fig. 3 illustrates examples of menus of data from which private data is selected according to an aspect of the present invention;
Fig. 4 illustrates examples of menus for managing private data according to an aspect of the present invention;
Fig. 5 illustrates examples of menus of data after private data has been locked or hidden according to an aspect of the present invention;
Fig. 6 is a flow chart illustrating an exemplary method of locking or hiding data stored in a mobile communication terminal in accordance with an aspect of the present invention;
Fig. 7 is a flow chart illustrating an exemplary method for viewing or accessing locked data in accordance with an aspect of the present invention; and
Fig. 8 is a flow chart illustrating another exemplary method for viewing or accessing locked or hidden data in accordance with an aspect of the present invention.

### DETAILED DESCRIPTION OF THE INVENTION

Described below is a mobile communication terminal in which private data may be selected and grouped together, and the grouped data may be locked or hidden.

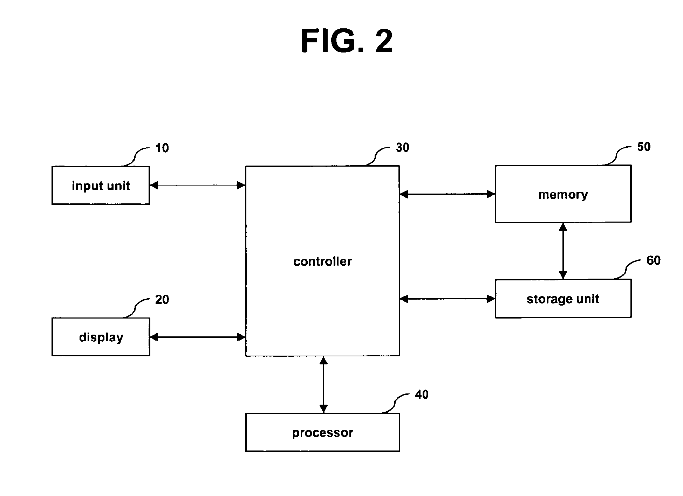

Fig. 2 is a block diagram illustrating components of a mobile communication terminal in accordance with one aspect of the present invention.

Fig. 2 illustrates an input unit 10 which allows a user to input commands, a display 20, a controller 30 which controls components of the mobile communication terminal based on inputted commands, a processor 40 which performs procedures for managing data stored in the mobile communication terminal, a memory 50 which stores data, such as, but not limited to, photos, videos, text messages and the like, and a storage unit 60 which stores lists of grouped data which is locked and/or hidden.

Hereafter, an exemplary operation of the mobile communication terminal will now be explained with reference to Fig. 2.

When a user desires to hide or lock (i.e., prevent access to) particular data stored in the memory 50 of the mobile terminal which he would like to keep private (such as, but not limited to, particular phone numbers, messages, photos, videos, etc.), the user selects the private data, and assigns a group identifier (such as a number or string of characters) to the group of selected data. The user may then lock or hide selected data in the group of selected data. The user may assign a name or title to the group of data, or may add the group of data to a pre-existing group of data. The user may assign the group identifier and select the private data via the input unit 10. The group identifier and a list of the data belonging to the group corresponding to the group identifier are stored in the storage unit 60 and/or the memory 50.

A first method of accessing private data which has been locked is described below. According to this method, when the user selects a menu which includes locked data, the controller 30 causes the menu to be displayed on the display 20. If the user selects locked data from the menu, the controller 30 may display a group identifier corresponding to the group of private data the selected data belongs to, or may prompt the user to enter a password (such as by displaying a "pop-up" window). If the user enters a correct password, the selected locked data is unlocked, and displayed by the controller 30 on the display 20 or otherwise made available to the user.

Another method by which a user may access private data which has been either locked or hidden is described below. According to this method, a user enters a group identifier corresponding to a group of private data which the user desires to access, and inputs a request to manage the group. The user may input the request in various ways, such as, for example, by pressing a predetermined key corresponding to the management function or by selecting a management function option from a menu. The processor 40 recognizes the user's request to manage the group, and sends the group identifier to the controller 30. The controller 30 then causes the display 20 to prompt the user to enter a password. If the user enters the correct password, the controller 30 displays on the display 20 a list of the private data corresponding to the group identifier entered by the user. When the user selects data from the displayed list, it is displayed or otherwise accessed by the user.

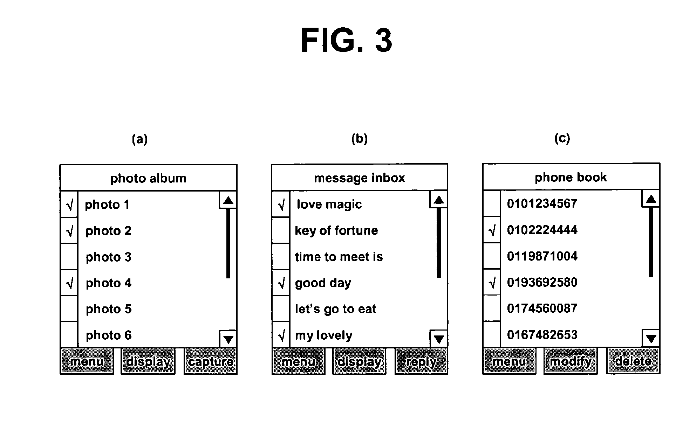

Fig. 3 illustrates examples of menus of data from which private data is selected according to an aspect of the present invention.

Fig. 3 illustrates a photo album menu (a), a message inbox menu (b), and a phone book menu (c), as examples of menus which may be displayed in a mobile communication terminal according to an aspect of the present invention. The photo album menu (a) lists photos (e.g., photo 1, photo 2, etc.) which are included in a photo album. The message inbox menu (b) lists text messages (e.g., "love magic", "key of fortune", etc.) which are included in a message inbox. The phone book menu (c) lists phone numbers which are included in a phone book.

If a user wishes to lock or hide certain data he wishes to keep private, he selects this data from menus. For example, as shown in Fig. 3, the user has selected photos photo 1, photo 2 and photo 4, messages "love magic", "good day" and "my lovely", and phone numbers 0102224444 and 0193692580 to lock or hide. After the user has selected data to lock or hide, he inputs a request to manage this data (such as, by pressing a specific key or selecting an option from a menu). At this time, a new group identifier is assigned to the group of selected private data, or the group of selected private data can be added to a pre-existing group of private data. The user may also assign a name or title to the group of selected data.

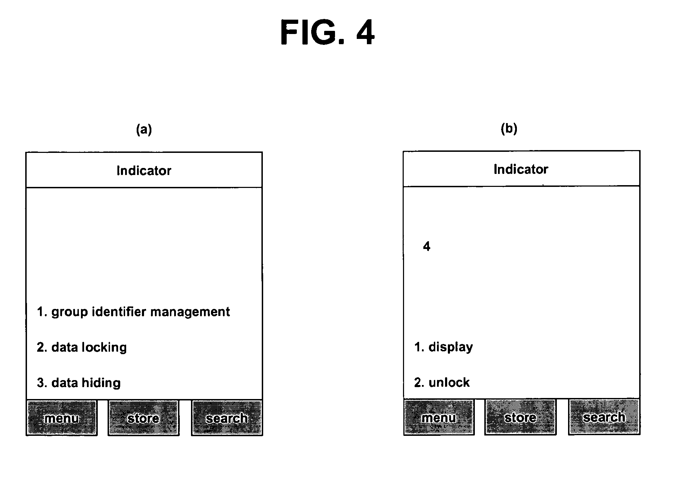

Fig. 4 illustrates examples of menus for managing private data according to an aspect of the present invention.

Menus (a) and (b), shown in Fig. 4, can be called up by entering a group identifier. Menu (a) lists various options for managing a group of private data which has been assigned to a group identifier. Option (1) allows a user to change the group identifier, and view or edit a list of private data assigned to the group identifier. Option (2) allows a user to lock certain private data in the group. Option (3) allows a user to hide certain private data in the group.

Menu (b) lists options for managing private data in a group which has been locked. When a user selects option (1), a list of the locked data will be displayed. When a user selects option (2), the locked data assigned to the group identifier (in this case, identifier '4') is unlocked.

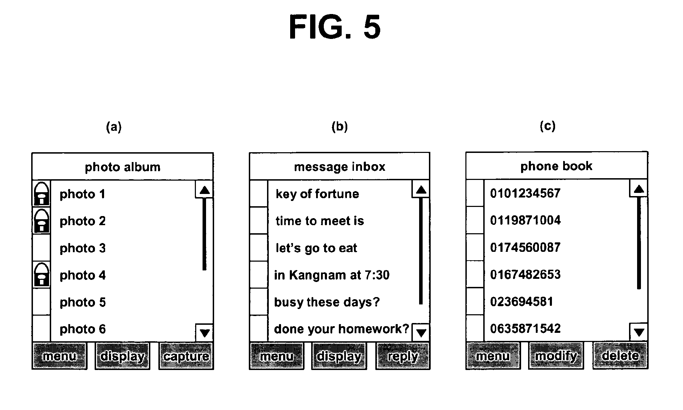

Fig. 5 illustrates examples of menus of data after private data has been locked or hidden according to an aspect of the present invention.

Fig. 5 illustrates an example in which photo 1, photo 2 and photo 4, which are listed in photo album menu (a), have been locked. Adjacent to the entries of photo 1, photo 2 and photo 4 are lock symbols, which indicate that these photos are locked. Also shown in Fig. 5 are menus (b) and (c), which correspond to the message inbox menu (b) and phone book menu (c) of Fig. 3, respectively. Menus (b) and (c) of Fig. 5 are displayed when messages "love magic", "good day" and "my lovely" and phone numbers 0102224444 and 0193692580 (shown in Fig. 3) are hidden.

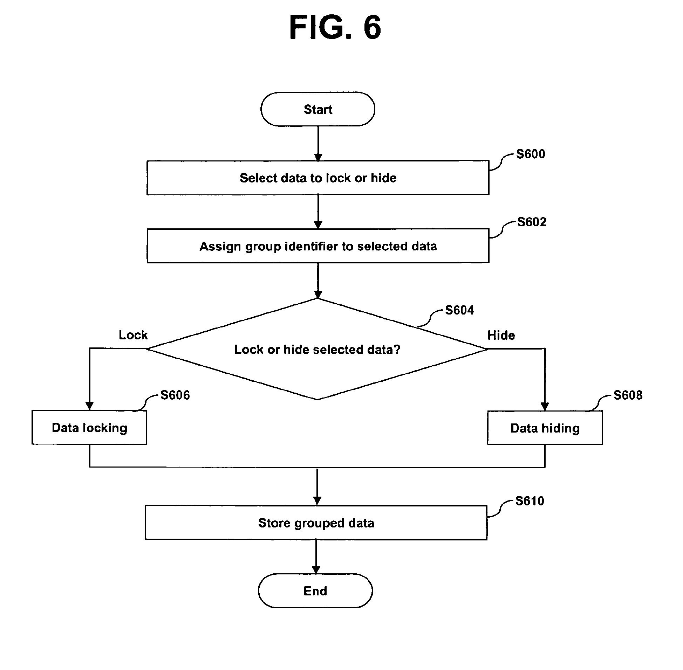

Fig. 6 shows a flow chart illustrating an exemplary method of locking or hiding data stored in a mobile communication terminal in accordance with an aspect of the present invention.

The method illustrated in Fig. 6 begins when a user selects private data stored in a mobile communication terminal to lock or hide (S600). A group identifier is then assigned to the selected private data (S602), and thus a group is formed. A user then decides to lock or hide certain data in the group (S604). If the user decides to lock data in the group, the data is locked (S606). If the user decided to hide certain data in the group from view, the data is hidden (S608).
The group identifier, a list of private data belonging to the corresponding group and indications of whether data in the group is locked or hidden is then stored in the memory 50 or the storage unit 60 of the mobile communication terminal (S610).

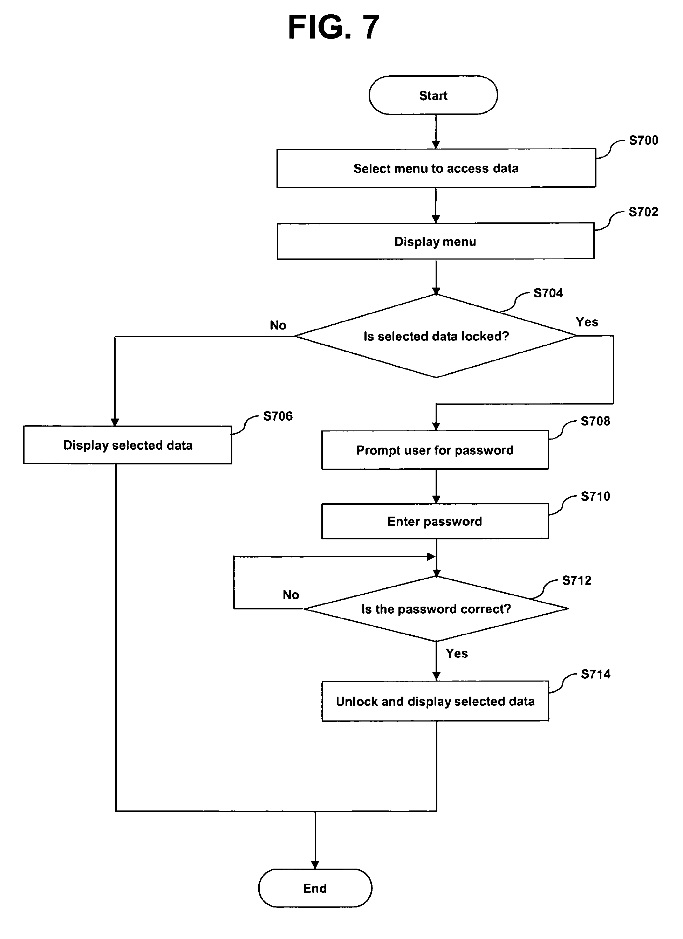

Fig. 7 is a flow chart illustrating an exemplary method for viewing or accessing locked data in accordance with an aspect of the present invention.

The method begins when a user selects a menu containing data which the users wishes to view or access (S700). For example, if the user wishes to view a photo, he would select a photo album menu. The mobile communication terminal then opens and displays the selected menu (S702).

The user then selects the data he would like to view or access from the menu, and the mobile communication terminal determines whether the selected data is locked (S704). If the data is not locked, it is displayed or otherwise made available to the user (S706). However, if the data is locked, the mobile communication terminal prompts the user to enter a password (S708). The user then enters a password (S710). The mobile communication terminal determines if the password is correct (S712), and if it is correct, the mobile communication terminal then unlocks and displays or otherwise makes available the data to the user (S714).

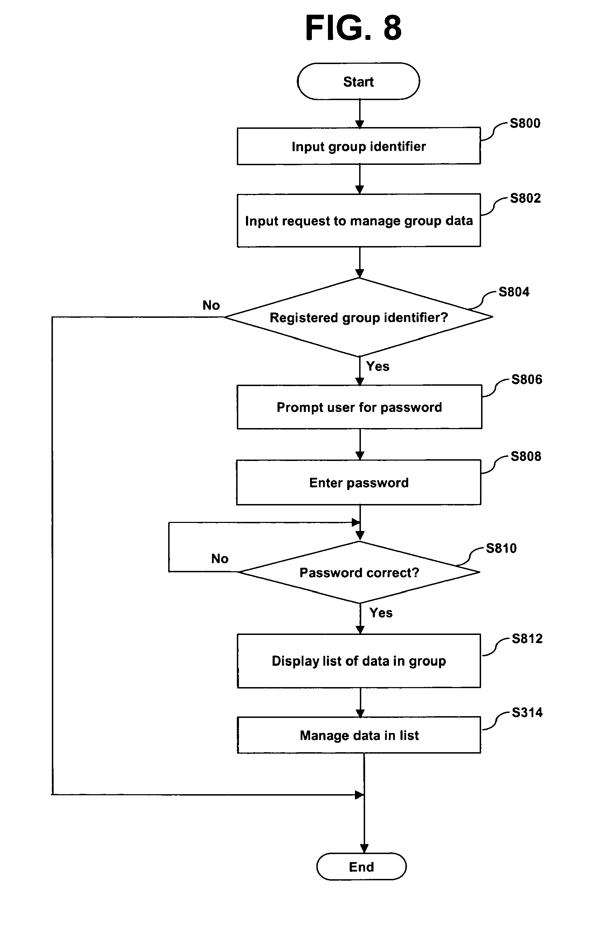

Fig. 8 is a flow chart illustrating another exemplary method for viewing or accessing locked or hidden data in accordance with an aspect of the present invention.

The method begins when a user enters a group identifier into a mobile communication terminal (S800). The user then inputs a request to manage the data corresponding to the entered group identifier (e.g., by pressing a specific key or selecting a menu option) (S802). The processor 40 of the mobile communication terminal determines whether the group identifier is a registered identifier (S804). If the group identifier entered by the user is registered, the controller 30 prompts the user to enter a password (S806). The user enters a password (S808), and the controller 30 determines whether the password is correct (S81 0). If the password is correct, the controller 30 displays a list of data belonging to the group corresponding to the group identifier (S812). At this point, the user may manage data in the list, such by unlocking or unhiding data in the list, or locking or hiding data in the list which is not already locked or hidden (S814).

The mobile communication terminal described above allows a user to group together and lock or hide selected data, which is assigned a group identifier. Thus, with this mobile communication terminal, a user may conveniently keep selected data private.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalents of such metes and bounds are therefore intended to be embraced by the appended claims.

In accordance with various embodiments of the present disclosure, the methods described herein may be implemented by software programs executable by a processor. The present disclosure contemplates a computer-readable medium that includes instructions or receives and executes instructions responsive to a propagated signal. The term "computer-readable medium" shall include any medium that is capable of storing, encoding or carrying a set of instructions for execution by a processor to perform any one or more of the methods or operations disclosed herein.

In a particular non-limiting, exemplary embodiment, the computer-readable medium can include a solid-state memory such as, for example, a memory card or other package that houses one or more non-volatile read-only memories. Further, the computer-readable medium may be a random access memory or other volatile re-writable memory. Accordingly, the disclosure is considered to include any one or more of a computer-readable medium or a distribution medium and other equivalents and successor media, in which data or instructions may be stored.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Accordingly, the disclosure and the figures are to be regarded as illustrative rather than restrictive.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, will be apparent to those of skill in the art upon reviewing the description.

The above disclosed subject matter is to be considered illustrative, and not restrictive, and the appended claims are intended to cover all such modifications, enhancements, and other embodiments which fall within the true spirit and scope of the present invention. Thus, to the maximum extent allowed by law, the scope of the present invention is to be determined by the broadest permissible interpretation of the following claims and their equivalents, and shall not be restricted or limited by the foregoing detailed description.

## Claims

1. A mobile terminal, comprising:
an input unit which allows a user to input a command;
a controller which groups data according to the inputted command and controls the grouped data; and
a memory which stores a group identifier identifying the grouped data.

2. The terminal according to claim 1, wherein the controller assigns the group identifier to the grouped data.

3. The terminal according to claim 1, wherein the controller stores the group identifier in the memory.

4. The terminal according to claim 1, further comprising:
a processor which processes the group identifier and the grouped data when the group identifier is inputted to the mobile terminal.

5. The terminal according to claim 4, wherein the processor determines whether an inputted group identifier is a registered group identifier.

6. The terminal according to claim 5, wherein the controller performs an authorization process when the inputted group identifier is a registered group identifier.

7. The terminal according to claim 6, wherein the authorization process comprises prompting the user to enter a password.

8. The terminal according to claim 7, wherein prompting the user to enter a password comprises displaying a pop-up window.

9. The terminal according to claim 5, wherein the controller displays a list of grouped data corresponding to the inputted group identifier on a display when the inputted group identifier is a registered group identifier.

10. The terminal according to claim 9, wherein data selected from the list of grouped data is displayed on the display.

11. The terminal according to claim 9, wherein a user may display, lock, unlock or delete data in the displayed list of grouped data.

12. The terminal according to claim 1, wherein the data comprises at least one of a text message, a phone number and an image stored in the mobile terminal.

13. The terminal according to claim 1, wherein the group identifier comprises at least one of a numeral and a character.

14. The terminal according to claim 1, wherein the controller adds the grouped data to a pre-existing group of data, or stores grouped data in the memory as a new group.

15. A method for managing data in a mobile terminal, comprising:
grouping data;
assigning a group identifier to the grouped data to identify the grouped data; and
storing the group identifier in a memory of the mobile terminal.

16. The method according to claim 15, wherein the grouped data is data to be locked or hidden.

17. The method according to claim 15, wherein the group identifier comprises at least one of a numeral and a character.

18. The method according to claim 15, further comprising locking or hiding data in the grouped data, and storing an indication of locked or hidden data with the group identifier.

19. A method for managing data in a mobile terminal, comprising:
grouping data and assigning a group identifier to the grouped data to identify the grouped data;
storing the group identifier and the grouped data; and
displaying the grouped data when the group identifier is inputted by a user.

20. The method according to claim 19, further comprising locking or hiding selected data in the grouped data, wherein storing the grouped data comprises one of adding the grouped data to a pre-existing group of data and storing the grouped data as a new group.

21. The method according to claim 19, further comprising assigning a title to the grouped data.

22. The method according to claim 19, further comprising determining whether a group identifier inputted by the user is a registered group identifier, and performing an authorization process when the inputted group identifier is a registered group identifier.

23. The method according to claim 22, wherein the authorization process comprises prompting the user to enter a password.

24. The method according to claim 23, wherein prompting the user to enter a password comprises displaying a pop-up window.

25. The method according to claim 22, further comprising displaying a list of the grouped data when the authorization process is passed successfully.

26. The method according to claim 25, further comprising displaying data selected from the list of grouped data.

27. The method according to claim 26, wherein the displayed data is able to be locked, hidden or deleted.

28. The method according to claim 19, further comprising displaying at least one of the group identifier and a title assigned to the grouped data.

29. The method according to claim 19, further comprising performing an authentication process when a specific key is pressed.

30. The method according to claim 29, wherein the grouped data is displayed if the authentication process is passed successfully.

31. The method according to claim 19, wherein the data comprises at least one of a text message, a phone number and an image stored in the mobile terminal.

32. The method according to claim 19, wherein the group identifier comprises at least one of a numeral and a character.
